# EUROPEAN PATENT APPLICATION

(11) **EP 2 463 030 A1**
(43) Date of publication of application: **13.06.2012**
(21) Application number: 10194144.1
(22) Date of filing: 08.12.2010
(51) Int. Cl.: B01L 9/00, G01N 35/00

(54) **Storage assembly for providing reagent carriers for being processed in an analyzing system**

(71) Applicant: F. Hoffmann-La Roche AG, 4070 Basel (CH); Roche Diagnostics GmbH, 68305 Mannheim (DE)
(72) Inventor: Drescher, Bernd, 82386 Oberhausen (DE); Senftner, Gottfried, 68623 Lampertheim (DE); Müller, Hans-Jürgen, 82347 Bernried (DE)
(74) Representative: Tiesmeyer, Johannes

(57) **Abstract**

The invention relates to a storage assembly for providing reagent carriers (20) for being processed in an analyzing system, comprising
- a plurality of containers (2) each containing a reagent carrier (20) in a predetermined position therein and each having an extraction opening (4) for extracting the reagent carrier (20) from the container (2), wherein each extraction opening (4) is covered by a separate breakable sealing foil (6) adhered to the respective container (2), and
- providing means comprising a frame (32) for providing said containers (2) in an access position allowing access to at least one container (2) at a time for the removal of the respective reagent carrier (20) from that container (2) through the extraction opening (4) thereof.

## Description

The present invention relates to a storage assembly for providing reagent carriers for being processed in an analyzing system.

Reagent carriers of the type considered here are for example test strips and preferably test chips e.g. biochips for detecting analytes in a sample. They can for example be used in an automatic chemical analyzing system for immunoassay applications in which binding reactions between reactants, which are preferably immobilized on a test area of the reagent carrier, and analytes which are present in a sample liquid wetting the test area are detected. These reagent carriers which are also referred to as chips in the following must be treated and handled in a protected manner until their intended use in an automatic analyzing system so that undesired contamination is avoided and the reactants retain their specific binding capability for the sample analytes.

The housings or frames of the reagent carriers can be formed from a variety of solid materials and especially from plastic such as polystyrene. Such plastic chips can for example, after their manufacture in an injecting moulding process, be coated with "dry chemistry" for example using a micro-spot method in order to immobilize the reactant molecules on the test area of the chip. Such a coating usually takes place automatically in a coating plant. After the chips have been prepared in this manner they have to be placed in a package for protecting them against environmental influences. Several months may indeed pass before the individual chips are used for medical or chemical investigations. Thus, the measures for protecting the chips against environmental influences such as varying air humidity, varying temperature, dust etc. must be effected in a reliable manner of a period of several months. In order to avoid mutual damaging of the chips and particularly damaging of the test area with its coating, the chips may be separated from each other in a magazine or the like. After such a magazine with reagent carrier chips included therein has been inserted in an automatic analyzing system, an on-board-stability of several weeks must be guaranteed for each single chip, i.e. each chip must be protected against varying air humidity, dust etc. until it is processed in said automatic analyzing system. The reagent carrier chips should be preferably provided in groups of e.g. one hundred pieces stored in a magazine package that is automatically manageable in the automatic analyzing system. It is essential that all reagent carrier chips in such a magazine package have equal air humidity conditions. It is a well-known practice to apply desiccants in magazine packages in order to minimize air humidity.

From WO 2007/082696 A1 a packaging cassette for reagent carrier chips is known. The packaging cassette has a plastic base housing which comprises interconnected adjacent compartments for reagent carriers. The compartments are separated from one another by partitions. Each compartment has its own hinged lid as a sealing cover allowing the compartment to be resealed. The compartments may include a small store of a desiccant. The packaging cassette according to WO 2007/082696 A1 is formed as a bar-shaped magazine.

WO 2007/082697 A1 discloses a group of reagent carrier chips that is combined to form a composite. Each of that carriers having at least one test region located in a shallow trough-like depression. The reagent carrier chips in the composite are held together exclusively by interconnected protective covers. Each composite forms a row of reagent carrier chips. A magazine in the shape of a package box contains a plurality of said rows of interconnected chips.

In US 6,497,845 B1 a storage container for holding analytical devices is disclosed. The storage container has the shape of a cylindrical drum made of a rigid plastic and comprising a plurality of test element compartments. The compartments are arranged circumferentially in the storage container wherein each compartment contains an analytical device. Each compartment has at least two opposite openings on the face sides of the cylindrical storage container. On both face sides of the storage container the openings of the compartments are sealed by a common sealing foil. In order to remove an analytical device from the storage container a plunger is inserted in the respective compartment opening at one face side of the container to push out the analytical device through the opening on the other face side of the container.

It is an object of the present invention to provide a storage assembly for reagent carrier chips that ensures optimal protection of the reagent carrier chips against environmental influences during their storage period, and that can be realized in a flexible manner so that it can be adapted to requirements of particular analytical systems in which the reagent carriers are to be processed.

In order to solve the object a storage assembly for providing reagent carriers for being processed in an analyzing system is proposed which comprises:
- a plurality of containers each containing a reagent carrier in a predetermined position therein and each having an extraction opening for extracting the reagent carrier from the container, wherein each extraction opening is covered by a separate breakable sealing foil adhered to the respective container, and
- providing means comprising a frame for providing said containers in an access position allowing access to at least one container at a time for the removal of the respective reagent carrier from that container by extracting it through the extraction opening.

The term "reagent carrier" is understood to include small test stripes and small test chips which have at least one test region for detecting analytes in a sample. The reagent carriers are preferably bio-chips for testing biological liquid samples. The chips may comprise a trough-shaped depression with a bottom surface prepared as a test area coated with respective reactants. The chips are preferably made of plastics, e.g. in an injection moulding process.

Each container of the plurality of containers includes preferably not more than one reagent carrier in a predetermined position therein such that the reagent carrier can be linearly pulled out through the extraction opening.

The containers are individually sealed, e.g. each container has its own sealing foil which closes the container at its extraction opening so that the reagent carrier in that container is protected against environmental influences. This measure of separately sealing each single container allows reliable leak tightness checks to be performed for each single container. The sealing foil provides a low cost and high quality vapour-tight sealing of the container. In use of the storage assembly in an analyzing system the concept of the individual sealing of the containers with sealing foils affords the advantage that only those particular containers have to be unsealed from which a reagent carrier has to be extracted for processing in that analyzing system. The sealing foil is breakable, i.e. it can be perforated or cut in an easy manner with a relative simple tool. The frame of the providing means should be preferably arranged to position said reagent carriers in a regular geometric arrangement in relation to one another with the extraction openings being exposed at a common access side of the frame so that selective access to the containers with an extraction tool is possible.

According to a preferred embodiment of the invention the frame comprises a plurality of separate compartments each containing not more than one of the containers and being arranged to dispose said containers in an arrangement with the extraction openings of the reagent carriers being arranged on a common access side of the array. The frame has the function of a magazine package. In a preferred embodiment of the present invention the frame is made of plastic and is a disposable package. The reagent carriers can be delivered from the manufacturer in such a magazine package. The magazine package with the containers therein may be sealed with a sealing foil or the like and be packaged in a cardboard box for example. The frame should have a rigid dimensionally stable structure. The array arrangement and also the frame are preferably arranged on a vertical plane or alternatively circumferentially around a vertical axis.

The containers are preferably secured e.g. by snap fit means in said array arrangement such that they are prevented from being unintentionally removed from said frame also when the reagent carrier is extracted from a respective container in an analyzing system.

According to a further preferred embodiment of the storage assembly according to the invention said providing means comprises a frame with at least one compartment formed as a column and containing a row of a plurality of said containers positioned adjacent to each other, wherein said compartment has at least one access opening allowing access to a respective container in the row for removing a reagent carrier therefrom, and wherein said compartment has an ejection opening for ejecting a container after a reagent carrier has been removed therefrom. Said providing means being adapted to let said containers in that row follow up after a respective container has been removed through that ejection opening. The row may be arranged horizontally, and a spring mechanism can be provided for urging that row to follow up after a respective container has been removed through said ejection opening. The result is that a subsequent container is positioned in his access position at the access opening with the extraction opening of the container being disposed at the access opening. The access opening and the ejection opening can be the same opening. According to another embodiment, the access opening and the ejecting opening are different openings on opposite sides of the frame. These openings on opposite sides of the frame can be arranged in alignment to each other. According to an alternative embodiment the access opening and the ejecting opening are assigned to different places in the row of a plurality of reagent carriers.

According to a preferred variant of the embodiment containing a row of a plurality of said containers in a column or a bar-shaped frame structure said column or bar-shaped frame structure is a vertically extending column or bar structure including a vertical stack of said containers, wherein said access opening and said ejection opening being arranged in a lower part of said compartment, such that the stack of containers is allowed to drop down to follow up by virtue of gravitation such that a subsequent container is disposed behind the access opening ready for extraction of a reagent carrier contained in said container.

As explained above the access opening and the ejection opening can be arranged on the same side of the frame or on opposite sides of the frame. They may be arranged in alignment to each other or in such a manner that they are assigned to different sites in the stack. In the last mentioned case said ejection opening is preferably being disposed beneath said access opening. In the case that the access opening and the ejection opening are arranged on opposite sides of the frame in alignment to each other and in the case that the access opening and the ejection opening are the same openings it is possible to employ a multifunctional tool which is adapted to cut off the sealing foil of a respective container at the access opening of a frame, to extract the reagent carrier from the container and to eject or pull out the empty container from the frame through the ejection opening.

A combined tool for cutting the sealing foil, for extracting the reagent carrier and for ejecting the empty container may be also employed in cases where the access opening and the ejection opening are disposed in assignment to different sites in the row or stack of containers.

According to a further embodiment of the storage assembly of the invention the container has guiding and positioning means such as rails and snap fit means for receiving a reagent carrier in its predetermined position. This measure facilitates the use of automatic tools for extracting the reagent carriers from the containers in an analyzing system.

According to a very simple and easy to manufacture embodiment of the containers they are unique in shape and size and being each formed as an elongate hollow cuboid with two opposite base sides, wherein one of the base sides includes the extraction opening.

In order to ensure a low air humidity in the containers it is proposed to store a desiccant therein. According to a preferred embodiment of the invention said desiccant is embedded in a plastics matrix forming at least a part of at least one inner surface of the respective container. According to a further embodiment said desiccant is embedded in a plastic matrix of a separate plastics member which is formed as a snap fit means for holding the reagent carrier in its predetermined position in the respective container. Such plastics are known for example as zeolithe based polymeric desiccants wherein said desiccant is embedded directly in a polymeric matrix and is processed e.g. directly with said polymer material in an injection moulding process. The advantage of such a plastic member with a desiccant embedded therein is that the desiccant is prevented from the formation of dust, and that said plastic member may have special technical functions. According to a special embodiment of the present invention the reagent carrier may include such a plastic material with an embedded desiccant.

The plastic member which is formed as a snap fit means according to the above mentioned embodiment can be a bottom plate comprising at least one flexible tongue which is in resilient engagement with a complementary engagement part of the reagent carrier in the respective container. The snap fit can be easily released by extracting the reagent carrier with a relatively small extracting force of an extraction tool.

A further aspect of the present invention is an extraction means for extracting reagent carriers from a storage assembly, in particular from a storage assembly according to one of the claims 1-12, that includes an array of compartments which contain reagent carriers in predetermined positions and have extraction openings at an access side of said array, said extraction means comprises:
- a hook-shaped extraction member having a free front end part and comprising a substantially horizontal extending entering section at the front end part and an engagement section extending downwardly from said entering section,
- positioning means for selectively positioning said extraction member relative to a respective compartment from which a reagent carrier is to be extracted,
- driving means adapted to automatically move said extraction member according to a motion sequence which includes
   - a forward movement to enter a respective compartment through the access opening thereof, with said extraction member being held or being brought by a superposed lifting movement in a lifted position such that it can enter the compartment along a path directly above a reagent carrier contained in that compartment until it covers that reagent carrier;
   - a lowering movement to engage the reagent carrier at a rear-facing section thereof;
   - a rearward movement to extract the engaged reagent carrier from the respective compartment, with the entering section covering the top of that reagent carrier;
   - a lifting movement to disengage the extracted reagent carrier,
   wherein said extraction means further comprises a receiving platform adapted to receive a respective reagent carrier during the course of extraction of said reagent carrier by means of the extraction member.

After said hook-shaped extraction member has been positioned in alignment with a particular container from which a reagent carrier shall be extracted the hook-shaped extraction member is driven to enter said compartment through the access opening. The dimensions of the compartments, the containers, the reagent carriers and the extraction member of the extraction means are matched to each other such that there is just enough space above the reagent carrier in order to accommodate the extraction member in its lifted position until the extraction member covers the top of the reagent carrier nearly completely. Then the extraction member is lowered until the engagement section thereof comes into engagement with a rear-facing section of a reagent carrier. Thereafter, the extraction member is moved rearwardly to extract the engaged reagent carrier from the respective compartment while the entering section covering the top of said reagent carrier. The reagent carrier is placed on the receiving platform of the extraction means from which it can be gripped for example by gripping means of a separate transport device. The extraction means is also usable to extract reagent carriers from compartments in cases that the reagent carriers are stored directly without an own container in such frame compartments.

The extraction member extends above - and covers the reagent carrier during the extraction movement so that at least a test area of the reagent carrier is protected against contamination. The extraction member also acts to keep away a sealing foil or parts thereof from the test area of the reagent carrier. As explained above, such sealing foils are used to seal the containers or chambers which contain the reagent carriers.

According to a preferred embodiment of the extraction means said extraction member has a leading cutting edge at its free front end part. Said leading cutting edge is formed and arranged to pierce a respective sealing foil of a container or chamber which includes the reagent carrier to be extracted. Preferably the cutting edge forms the top and front edge of the free front end part of said extraction member and it can be shaped as a tip. Such a leading cutting edge can cut a sealing foil without frazzling it in a lot of parts. The foil will be cut by said cutting edge in the course of the forward movement of said extraction member when it is activated to extract a respective reagent carrier. The forward movement of the extraction member is preferably superposed by a lifting movement thereof in order to curl a cut section of the foil near the upper end of the extraction opening.

According to a further preferred embodiment of the extraction means said positioning means comprises a guiding spike arranged in a predetermined geometrical relation relative to the entering section of said extraction means and being adapted to enter a compartment adjacent to a respective compartment from which a reagent carrier is to be extracted by said extraction means. According to this measure dimensional variations of said array of compartments and small inaccuracies in the positioning of the array of compartments in the respective analyzing system may be balanced or compensated since the extraction member is aligned to the compartment based on the reference which is given by the guiding spike entering a respective neighbour compartment.

Embodiments of the present invention are explained with reference to the accompanying drawings.
- Fig. 1: shows in a perspective view a cuboid-shaped container sealed with its own sealing foil at an extraction opening;
- Fig. 2: is a front view of the container without the sealing foil;
- Fig. 3: is a perspective view of the container, a bottom plate to be inserted in the container and a reagent carrier to be placed on said bottom plate in the container;
- Fig. 4: shows a perspective cut view of said container with the bottom plate inserted therein;
- Fig. 5: is a perspective cut view of the container with the bottom plate and the reagent carrier arranged in their predetermined positions in that container;
- Fig. 6: is a perspective view of a frame or a magazine disposing said containers in a two-dimensional array arrangement;
- Fig. 7: is a prospective rear side view of the frame or magazine shown in Fig. 6;
- Fig. 8: is a perspective view of a further embodiment of a frame;
- Fig. 9: is a perspective view of a further embodiment of a frame including a plurality of compartments;
- Fig. 10: is a perspective view of a frame with a compartment formed as a column in order to accommodate a stack of containers;
- Fig. 11: is a perspective view of circular arrangements of column-frames of the type shown in Fig. 10, wherein one frame is shown partially cut open;
- Figs. 12-14: are perspective views of a part of a storage assembly and a part of an extraction means according to the invention in three different snap shots of an extraction process;
- Fig. 15: is an perspective view of an embodiment of an extraction means according to the present invention.

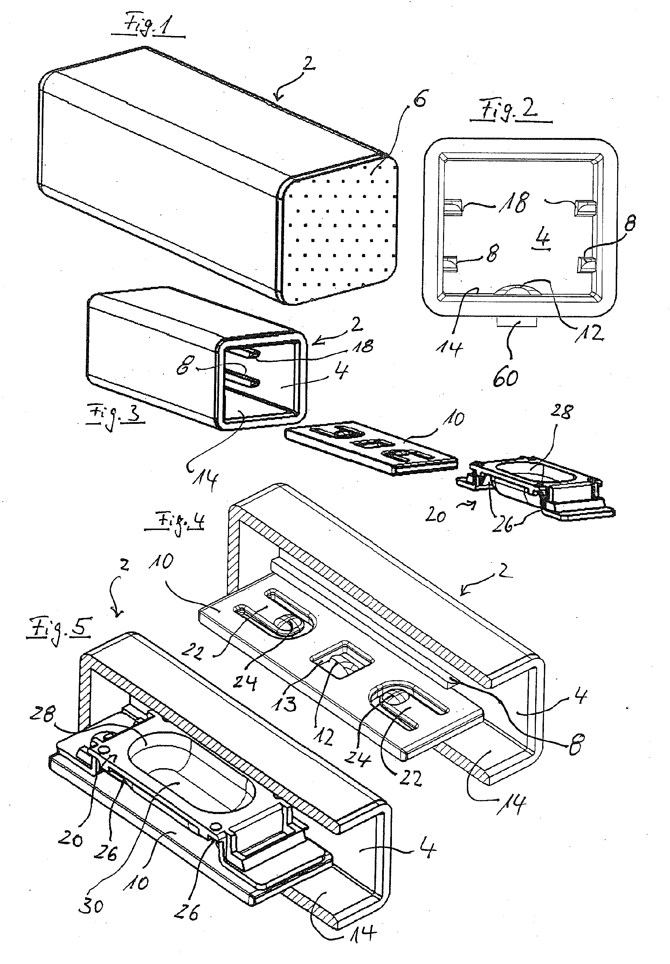

For a storage assembly according to a preferred embodiment of the present invention containers 2 having the form of an elongate cuboid with an extraction opening 4 at one of the cuboid sides are provided as shown in Figures 1-6, 10-11. In its "new condition" each container 2 with a reagent carrier 20 and optionally a bottom plate 10 included therein is sealed at the extraction opening 4 with an individual sealing foil 6 adhered thereto. Fig. 1 shows the completely closed and sealed container 2.

Figs. 2-5 show the container 2 without the sealing foil 6 in order to provide a view into the interior of the container 2. There are shown two lower guiding- and positioning rails 8 for guiding and positioning a bottom plate 10 in a predetermined position in said container 2 as shown in Fig. 4. The bottom plate 10 is a plastic member with a desiccant embedded in the plastic matrix of said bottom plate 10. The preferably resilient bottom plate 10 is secured by snap-fit means 12, 13 in its predetermined position shown in Fig. 4, wherein the snap-fit means comprise a nose 12 which slightly extends upwardly from the bottom face 14 of the container 2 into a central hole 13 of the bottom plate 10. The bottom plate 10 is preferably symmetrical with regard to two orthogonal planes.

There are also shown two upper guiding- and positioning rails 18 in Figs. 2 and 3. The positioning- and guiding rails 18 are provided for guiding and positioning the reagent carrier 20 shown in Fig. 3 into the predetermined position shown in Fig. 5 on top of the bottom plate 10. The bottom plate 10 has two flexible tongues 22 with a projection 24. The projections 24 resiliently engage the reagent carrier 20 at recesses 26 at the under side of the reagent carrier 20. In this way the reagent carrier 20 is substantially strainless fixed in its predetermined position in the container 2 but can be extracted through the extraction opening 4 with relatively low expenditure of extracting force. The reagent carrier 20 is a plastic chip having a trough-shaped depression 28 with a test area 30 at its bottom surface. The test area 30 is prepared with reactants immobilized thereto for performing binding reactions between those reactants and analytes which are present in a sample liquid which is to be placed in the trough-shaped depression 28 during an analyzing process in a respective analyzing system. The coating of the test area 30 with the reactants is very sensitive and must be protected against varying environmental influences during the storage period of the reagent carrier in the container 2. To meet this requirement the sealing foil 6 is employed to hermetically close the container 2 after having inserted the members 10 and 20 in their positions shown in Fig. 5.

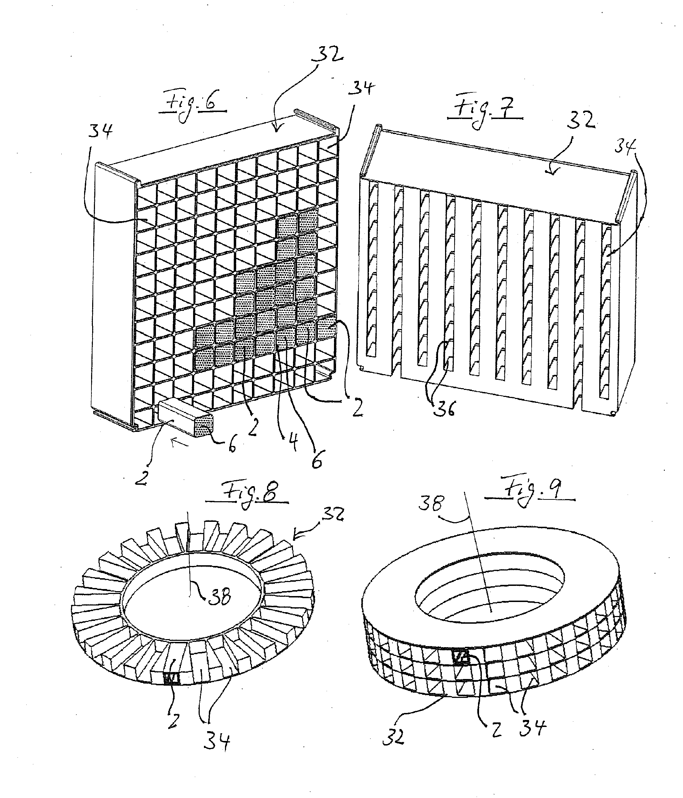

Fig. 6 shows a frame 32 for accommodating a plurality of containers 2 in compartments 34 which are arranged to form a regular two-dimensional array so that it disposes said containers 2 in a corresponding array arrangement with the sealed extraction openings 4 being arranged on a common outer access side of said array arrangement. The containers 2 are preferably inserted in the compartments 34 such that the sealded extraction openings with the sealing foils 6 are disposed in a position slightly behind the front ends of the compartments, such that the foils 6 are protected against unintended damaging.

Fig. 7 shows the frame of Fig. 6 in a rear view.

Fig. 8 shows an embodiment of a frame 32 which disposes the containers 2 circumferentially around a vertical central axis 38 and in radial alignment with regard to said axis 38. The access side of the circular one layer array defined by the frame 32 of Fig. 8 is the radial outer side, but it is not excluded that in an alternatively embodiment the radial inner side is the access side.

Fig. 9 shows a frame construction formed from three one layer frames 32 of the type shown in Fig. 8 centred around a common vertical central axis 38.

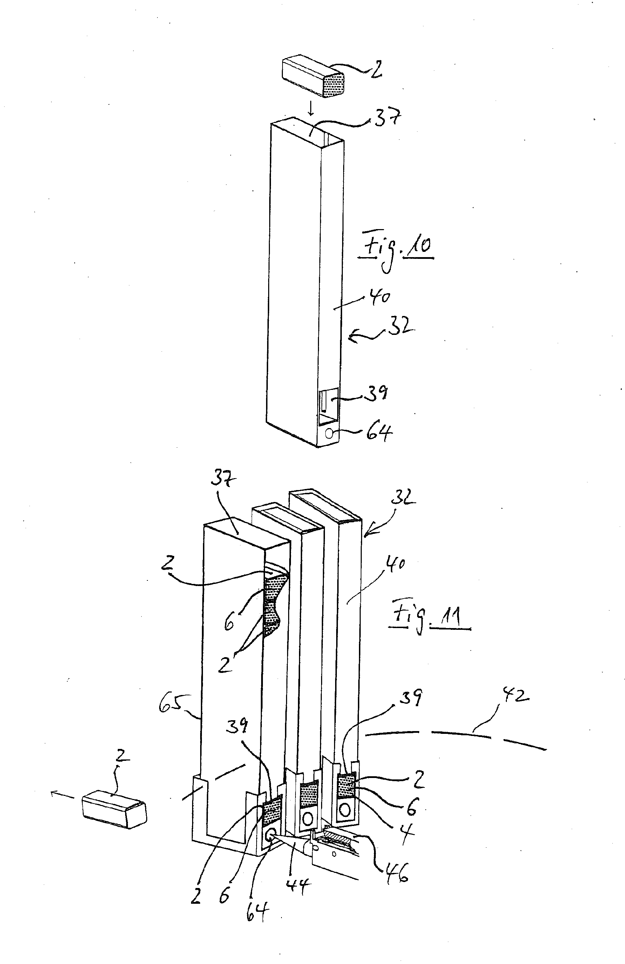

Fig. 10 shows a frame 32 which is formed as a column and which has one compartment 37 for accommodating a vertical stack of a plurality of containers 2. In the lower part of the column-shaped frame 32 an access opening 39 is provided on the narrow side 40 of the frame 32. Fig. 11 shows a group of such column-shaped frames 32. As shown in Fig. 11 the containers 2 are stacked such that their sealed extraction openings 4 are disposed on the narrow side 40 so that a respective container 2, which is positioned on the level of the access opening 39, is in its access position allowing access through its extraction opening 4 to the reagent carrier 20 contained therein. In the embodiment of the storage assembly according to Fig. 11 frames 32 of the type shown in Fig. 10 are arranged on a circular line 42. Only three frames 32 are shown in Fig. 11; but the embodiment of Fig. 11 may include even more of those frames 32. According to a variant (not shown) of the embodiment of Fig. 11 the frames 32 are arranged on a straight line.

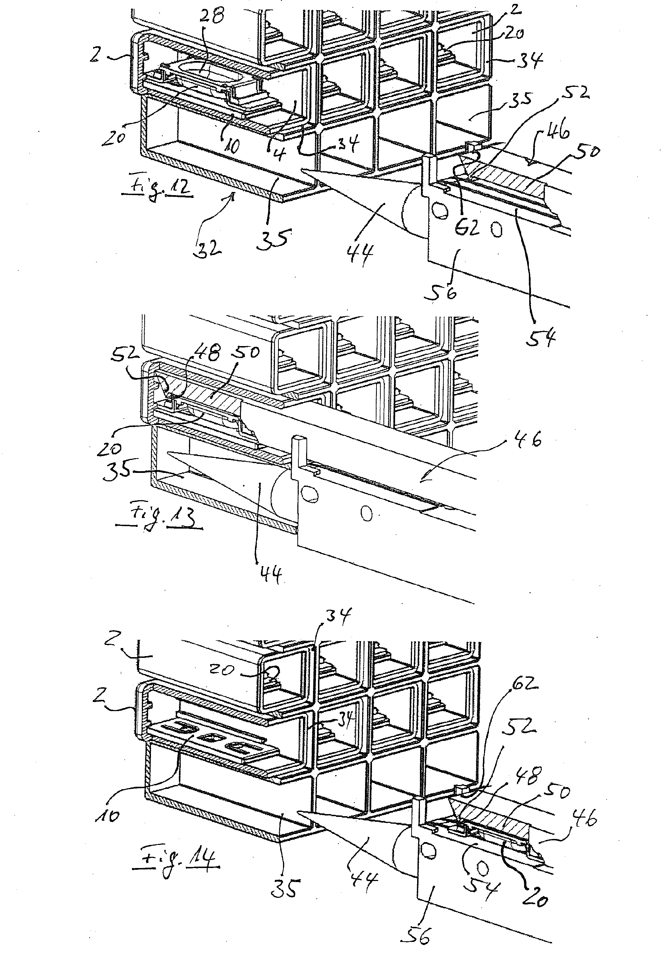

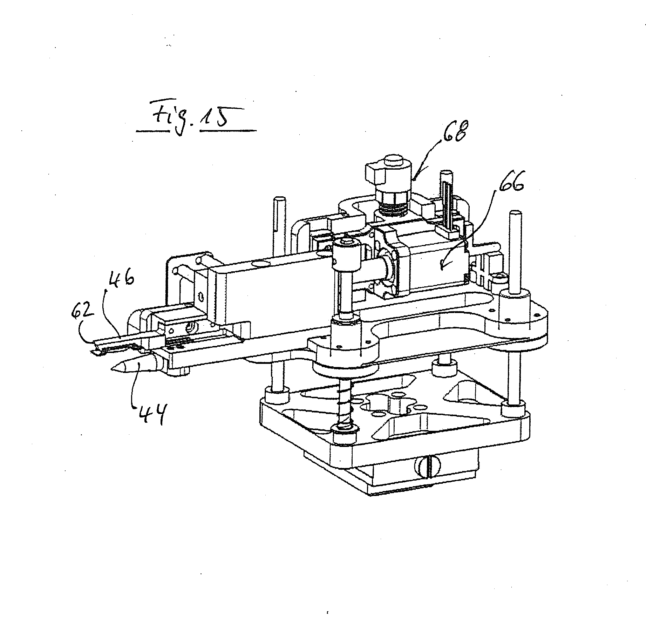

Before explaining the process of extracting a reagent carrier 20 from a container 2 in the embodiment according to Fig. 11 reference is made to Figs. 12-14 which show a sequence of snap shots of the procedure of extracting a reagent carrier 20 from a container 2 in an array arrangement provided by a frame according to Fig. 6. The sealing foils 6 of the containers 2 are not shown in Figures 12-14. The tool for extracting the reagent carrier 20 is an extraction means according to the present invention. Only a leading part of that extraction means is shown in Figs. 12-14. Fig. 15 shows the extraction means in a perspective overall view.

The extraction means comprises a positioning means having a guiding spike 44 for entering a compartment 35 directly beneath a respective compartment 34 from which a reagent carrier 20 is to be extracted. According to Fig. 12 the guiding spike 44 and the compartment 35 have been positioned in axial alignment to each other. Depending on the particular embodiment of the storage assembly this prepositioning of the guiding spike 44 relative to the compartment 35 is performed by moving the extraction means or/and by moving the frame 32. The extraction means further comprises a hook-shaped extraction member 46 which is arranged and movable in a defined geometrical relationship with regard to the guiding spike 44. The extraction member 46 can be moved in a forward direction and in a rearward direction parallel to the axis of the guiding spike 44. Starting from the situation shown in Fig. 12 the guiding spike 44 is moved into the compartment 35. Since the greatest diameter of the conical-shaped guiding spike 44 corresponds essentially to the height and width of a compartment 35 a mutual fine-alignment between a compartment 35 and the guiding spike 44 may occur. After having inserted the guiding spike 44 into the compartment 35, the bar-shaped extraction member 46 is moved forward to enter the container 2 in the compartment 34 above the compartment 35 which is occupied by the spike 44. During this horizontal movement of the extraction member 46 is also brought in a lifted position so that it can enter the respective container 2 and cover the reagent carrier 20 included therein. In a subsequent step of the moving sequence of the extraction member 46 it will be lowered so as to engage the reagent carrier 20 at a rear-facing section 48 thereof as shown in Fig. 13. The extraction member 46 has at its free front end part a substantially horizontal extending entering section 50 that covers the top side of the reagent carrier 20 in order to protect the test area of the reagent carrier 20. An engagement section 52 extends downwardly from said entering section 50. This engagement section 52 is shown in Fig. 13 in the engagement position at the rear-facing section 48 of a reagent carrier 20.

Starting from the situation according to Fig. 13 the extraction member 46 will be retracted in order to extract the reagent carrier 20 from its container 2 and to place it upon a horizontal receiving platform 54 on top of the holder 56 of the guiding spike 44. Fig. 14 shows the reagent carrier 20 on the receiving platform 54.

After having extracted the reagent carrier 20 in this manner the extraction member 46 is lifted in its lifted position.

The bottom plate 10 remains in the container 2 as shown in Fig. 14 since the snap-fit between the container 2 and the bottom plate 10 is stronger than the snap-fit between the bottom plate 10 and the reagent carrier 20. Not visible in the Figs. 12-14 are means that secure the containers 2 in the compartments 34 of the frame 32. That securing means include a projection 60 on the under side of the container 2 (cf. Fig. 2) and a complementary recess 36 in the bottom surface of the compartment 34. That recess and the projection 60 are in engagement with each other so as to prevent the container 2 from being unintentionally removed from its compartment 34.

The entering section 50 of the extraction member 46 has a leading cutting edge 62 which defines also the upper edge of the engagement section 50. Said cutting edge has a sloped run to form a tip. The cutting edge 62 has the function to cut the sealing foil 6 of a container 2 from which a reagent carrier 20 is to be extracted. The entering section 50 of the extraction member 46 is formed and dimensioned to keep off parts of the sealing foil 6 away from the trough-shaped depression 28. The opening to be perforated by the extraction member 46 can be enlarged by lifting and lowering the extraction member 46, and the cut foil can be caused to curl near the upper end of the extraction opening 4.

The frame 32 shown in Figs. 12-14 has a lowest layer of compartments 35 adapted to the dimensions of the guiding spike 44 as mentioned above. The other compartments 34 are a little bit greater in height and width, but the containers 2 inserted therein have a height and width according to the greatest diameter of the cone-shaped guiding spike 44 so that a compartment 34 with an empty container 2 can act with the guiding spike 44 in the same manner as the compartment 35 for adjustment purposes.

Each container 2 in the respective array arrangement can be addressed by the extraction means for selectively extracting a reagent carrier 20 therefrom.

In the embodiment according to Fig. 11 the extraction of a reagent carrier 20 from a container 2 is performed in a similar manner as in the above explained case. The guiding spike 44 of the extraction means can enter a hole 64 of the lowest stack-position. This position is normally occupied by a container 2 from which a reagent carrier 20 was extracted before. After having performed a mutual alignment between the hole 64 in the column-shaped frame 32 and the guiding spike 44 of the extraction means, the extraction member 46 is moved forward to cut the sealing foil 6 of the respective container 2 which is positioned behind the access opening 39 and which is supported by the empty container 2 positioned behind the hole 64. The extraction member 46 is then moved to extract the reagent carrier 20 from the respective container 2 in the same manner as explained above with regard to Figs. 12-14. The guiding spike 44 is operable to eject the empty container 2 positioned behind the hole 64 of the column-shaped frame 32 through an ejection opening (not visible) at the rear side 65. In the overall view Fig. 15 of the extraction means the guiding spike 44, the hook-shaped extraction member 46 with its cutting edge 62, horizontal drive means 66 for the extraction member 46 and vertical drive means 68 for the extraction member 46 and the guiding spike 44 are shown.

## Claims

1. Storage assembly for providing reagent carriers (20) for being processed in an analyzing system,
comprising
- a plurality of containers (2) each containing a reagent carrier (20) in a predetermined position therein and each having an extraction opening (4) for extracting the reagent carrier (20) from the container (2), wherein each extraction opening (4) is covered by a separate breakable sealing foil (6) adhered to the respective container (2), and
- providing means comprising a frame (32) for providing said containers (2) in an access position allowing access to at least one container (2) at a time for the removal of the respective reagent carrier (20) from that container (2) through the extraction opening (4) thereof.

2. Storage assembly according to claim 1, wherein said frame (32) has a plurality of separate compartments (34) each containing not more than one of said containers (2) and being arranged to dispose said containers (2) in an array arrangement with the extraction openings (4) of the containers (2) being arranged on a common access side of the array.

3. Storage assembly according to claim 2, wherein said array arrangement is arranged on a vertical plane or circumferentially around a vertical axis.

4. Storage assembly according to claim 2 or 3, wherein the containers (2) being secured in said array arrangement such that they are prevented from being unintentionally removed from said array arrangement.

5. Storage assembly according to claim 1, wherein said providing means comprises a frame (32) with at least one compartment (37) formed as a column or bar and containing a row of a plurality of said containers (2) positioned adjacent to each other, wherein said compartment (37) has at least one access opening (39) allowing access to a respective container (2) in the row for removing a reagent carrier (20) therefrom, and wherein said compartment (37) has an ejection opening for ejecting a container (2) after a reagent carrier (20) has been removed therefrom, wherein said providing means being adapted to let the containers (2) in said row follow up after a respective container (2) has been removed through said ejection opening.

6. Storage assembly according to claim 5, wherein said column is a vertically extending column including a vertical stack of said containers (2), wherein said access opening (39) being arranged in a lower part of said compartment (37), such that after ejection of a container (2) through that ejection opening the stack of containers (2) drops down to follow up by virtue of gravitation so that a subsequent container (2) is disposed behind the access opening (39) ready for extraction of the reagent carrier (20) contained in that container.

7. Storage assembly according to one of the preceding claims, wherein each container (2) has inner guidance and positioning means (8, 18) for receiving a reagent carrier (20) in its predetermined position.

8. Storage assembly according to one of the preceding claims, wherein the containers (2) are unique in shape and size and being each formed as an elongate hollow cuboid with two opposite base sides, wherein one of the base sides includes the extraction opening (4).

9. Storage assembly according to one of the preceding claims, wherein each container (2) includes a desiccant.

10. Storage assembly according to claim 9, wherein said desiccant is embedded in a plastic matrix forming at least a part of at least one inner surface of the respective container.

11. Storage assembly according to claim 9 or 10, wherein said desiccant is embedded in a plastic matrix of a separate plastic member (10) which is formed as a snap-fit means for holding the reagent carrier (20) in its predetermined position in the respective container.

12. Storage assembly according to claim 11, wherein said plastic member (10) is a bottom plate comprising at least one flexible tongue (22) which is in resilient engagement with a complimentary engagement part (26) of the reagent carrier (20) in the respective container (2)

13. Extraction means for extracting reagent carriers (20) from a storage assembly, in particular from a storage assembly according to one of the claims 1 to 12, that includes an array of compartments which contain reagent carriers (20) in predetermined positions and have extraction openings at an access side of said array, said extraction means comprises:
- a hook-shaped extraction member (46) having a free front end part and comprising a substantially horizontal extending entering section (50) at the front end part and an engagement section (52) extending downwardly from said entering section (50),
- positioning means (44) for selectively positioning said extraction member (46) relative to a respective compartment (34) from which a reagent carrier (20) is to be extracted,
- driving means (66, 68) adapted to automatically move said extraction member (46) according to a motion sequence which includes
- a forward movement to enter a respective compartment (34) through the access opening thereof, with said extraction member (46) being held or being brought by a superposed lifting movement in a predetermined lifted position such that it can enter the compartment (34) along a path directly above a reagent carrier (20) contained in that compartment (34) until it covers that reagent carrier (20);
- a lowering movement to engage the reagent carrier (20) at a rear-facing section (48) thereof;
- a rearward movement to extract the engaged reagent carrier (20) from the respective compartment (34), with the entering section (50) covering the top of that reagent carrier (20);
- a lifting movement to disengage the extracted reagent carrier (20),
wherein said extraction means (46) further comprises a receiving platform (54) adapted to receive a respective reagent carrier (20) during the course of extraction of said reagent carrier (20) by means of the extraction member (46).

14. Extraction means according to claim 13, wherein said extraction member has a leading cutting edge (62) at its free front end part.

15. Extraction means according to claim 13 or 14, wherein said positioning means comprises a guiding spike (44) arranged in a predetermined geometrical relation relative to the entering section (50) of said extraction means (46) and being adapted to enter a compartment (35) adjacent to a respective compartment (34) from which a reagent carrier (20) is to be extracted by said extraction means.
